# EUROPEAN PATENT APPLICATION

(11) **EP 0 521 575 A1**
(43) Date of publication of application: **07.01.1993**
(21) Application number: 92201972.4
(22) Date of filing: 30.06.1992
(51) Int. Cl.: A23G 9/20, F04B 43/12

(54) **A device for preparing and dispensing ice cream, more particularly soft ice**

(30) Priority: 02.07.1991 NL 9101153
(71) Applicant: LEIJSTRA APPARATEN B.V., NL-8629 RN Scharnegoutum (NL)
(72) Inventor: Busman, Sietse, NL-9204 GE Drachten (NL); Leijstra, Wiebe, NL-8629 RN Scharnegoutum (NL); Landman, Sietse, NL-8802 RG Franeker (NL)
(74) Representative: Boelsma, Gerben Harm, Ir.

(57) **Abstract**

The invention relates to a soft-ice preparing and dispensing device. A flexible conduit and squeeze roller type pump (8) is used for pumping a supply of pre-mixed and pre-cooled ice ingredients (5) to a dispensing cylinder (9). In the pump a rotor with squeeze rollers is cooperating with an arcuate support wall section. This arcuate support wall section is adapted to be swung away from the rotor so as to remove the hose from between said rotor and said arcuate support wall section in a simple manner.

## Description

The invention relates to a device for preparing and dispensing ice cream, more particularly soft ice, comprising a mixing and dispensing cylinder with a stirring assembling and a dispensing opening, said cylinder being connected to the outlet of a pump of the flexible conduit and squeeze roller type, the inlet of which is to be connected to a supply of pre-mixed and pre-cooled ingredients, said pump comprising a housing with inlet and outlet guide openings for at least one flexible hose that is supported within the housing against an arcuate support wall section that extends from a bottom wall of the housing and comprising a rotor with squeeze rollers, wherein said squeeze rollers may, while the rotor is rotating, squeeze said house in a number of locations travelling along said support section in the direction of rotating, and wherein provisions are made for sucking and adding a quantity of air.

Such a device is disclosed in US-A-3.180.106. The use of a pump of the flexible conduit and squeeze roller type instead of other pumps of the positive displacement type, such as plunger and gear pumps, has the great advantage, that the moving parts of the pump are kept out of contact with the bacterium sensitive ice within the pumping chamber (= the interior of the hose). The well-known embodiment, however, has still certain disadvantages, which prevent an optimal use of the potential possibilities of a flexible hose and squeeze roller type of pump to be used for the treatment of a bacterium sensitive product such as ice cream. These disadvantages are connected with the circumstance, that undesired bacterium growth has admittedly been reduced by using a flexible conduit and squeeze roller type pump instead of other pump types, but is still taking place, so that periodical cleaning is still required.

In the well-known embodiment the arcuate support wall section is making part of a circumferential wall that is integrally formed with the bottom wall of the housing. This means, that it is very difficult, if practically possible, to remove the hose for cleaning purposes without first removing the rotor. This may lead to the tendency to omit the required cleaning treatments.

It is an object of the invention to overcome the above drawbacks and to further improve the well-known device.

In accordance with the invention this aim is achieved in that the arcuate support wall section is making part of an auxiliary piece that is mounted, on the bottom wall of the housing, to be swung from its operative position away from the rotor. As a result of this the removal of a hose, in which an excessive bacterium growth has taken place, has become very simple. For this the auxiliary piece is simply swung outwardly, after which the contaminated hose can be simply pulled out and substituted by a clean one. The removal of the hose has become even so simple that in view of the low price of a piece of hose, it has become worthwhile to frequently put a new length of hose into the pump.

As in the well-known device, the provision for sucking and adding a quantity of air may involve the use of a second hose, the outlet end of which is united with that of the pumping hose proper at a downstream location and the inlet end of which simply opens into the surrounding atmosphere. As in the well-known device this guarantees that the sucked and added amount of air is in a fixed proportion to the volume of ice mix within the first hose, so that a uniform quantity of the soft ice is obtained.

Further improvements are obtained by the features mentioned in the sub claims.

The invention will be hereinafter further explained by way of example with reference to the drawing.
Fig. 1 is an elevational view, partially in section, showing the complete device of the invention;
fig. 2 is a plan view of the pump of the device of fig. 1;
fig. 3 is a cross-sectional view along the line III-III of fig. 2;
fig. 4 is a cross-sectional view along the line IV-IV of fig. 2 and
fig. 5 is a cross-sectional view along the line V-V of fig. 2.

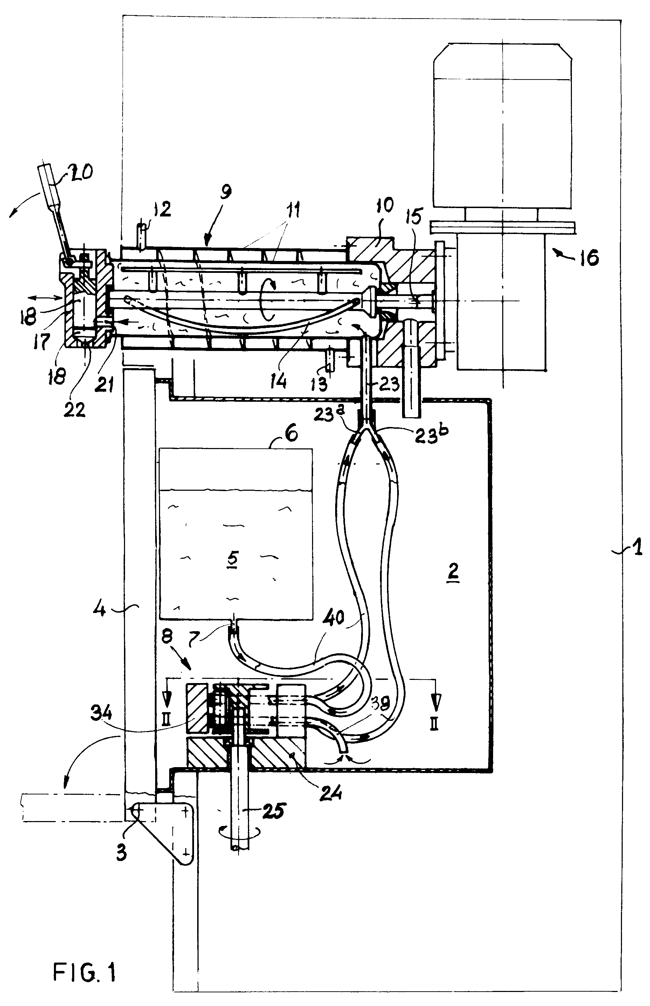

The device shown in fig. 1 comprises a (refrigerating) housing 1 with a space 2 therein which is accessible via a door 4 that is pivotally mounted about a horizontal axis 3 so as to be opened by tilting it forwardly. In the space 2 there is a supply 5 of pre-mixed and precooled ice-cream ingredients, the so-called ice-mix. These ingredients are normally supplied by specialized firms in a flexible container 6, which is provided with an outlet 7.

Under the container 6 with the supply of ice mix 5 there is provided a pump 8, in which the invention is embodied and which will be hereinafter described in more detail.

Above the mix containing space 2 there is provided the usual horizontal mixing and dispensing cylinder 9, comprising a bottom piece 9 within the housing 1, with a double walled cylinder 11 extending therefrom towards the front (to the left in the drawing) of the housing 1. Between the walls of the double walled cylinder 11 a helical passage is formed for passing a cooling liquid therethrough that is supplied and discharged at 12 and 13 respectively.

A stirring assembly 14 is provided within the cylinder 9, the shaft 15 of which extends rearwardly through the bottom piece 10 and may be driven, via a reduction gear, by an electric motor 16 mounted on the opposite side of the bottom piece.

The cylinder 9 is closed on the front side by a dispensing head 17, which is accessible from the outside. The latter has a vertical cylinder 18, in which a plunger 19 may be displaced up and down by actuating a lever that is connected to the plunger at the upper end of the latter. An opening 21 in the cylinder wall of the head 17 at a location facing the cylinder 9, is normally closed by the plunger 19 in the lower position of the latter and may - by displacing the plunger 19 upwardly - be connected with a dispensing opening 22 in the lower end of the head 17 so as to cause the contents of the cylinder 9 to discharge under pressure.

Removal of the head - while the device is switched off-provides for an easy access to the cylinder 9 for e.g. cleaning.

In use the cylinder 9 is filled and kept under pressure by the pump 8 through an inlet tube 23 that extends from the cylinder through the upper wall of the space 2 downwardly into said space.

In accordance with the invention the pump 8 is a pump of the flexible conduit and squeeze roller type. The pump is mounted on a base plate 24 which in turn is fastened on the bottom wall of the space 2.

A vertical shaft 25 is rotatably mounted in the base plate 25 and extends downwardly into the housing section under the space 2 where the shaft is connected to a drive motor (not shown).

An upper shaft end portion 25a extends upwardly beyond the base plate 24 and carries a rotor 27 adapted to operate as a displacement member. The rotor comprises two vertically spaced concentric discs 27 and 28, between which three upright rollers 29, 30 and 31 are rotatably mounted at equi-angular (120°) positions around the shaft 25.

The rollers 29-31 of the rotor 26 cooperate with a vertically orientated support wall 32, which extends along an arc of about 150° about the axis of the shaft 25, the radius of which arc being slightly larger than that of the circumscribed circle of the three rollers 29-31.

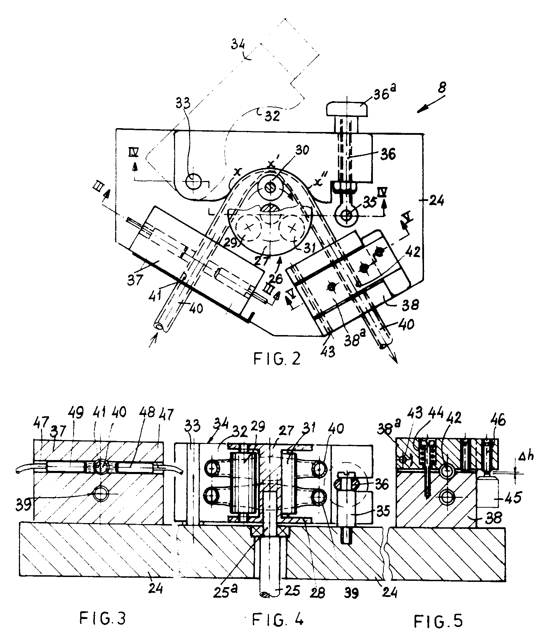

The vertical support wall 32 is provided on an auxiliary piece 34 that is swingibly mounted about a vertical axis 33. The latter is normally held in the active position shown in full lines in fig. 2 by means of a clamping screw 36, which is tiltably mounted on the base plate 24 about a vertical axis 25. Loosening of the nut 36a, however, permits the auxiliary piece to be turned into the inactive position indicated by dash-dotted lines.

Furthermore an inlet guide block 37 and an outlet guide block 38 are mounted on the base plate 24.

In the example shown in the drawing each of the guide blocks 37, 38 comprise two horizontal guide bores for a lower hose 39 and an upper hose 40.

When assembling, the hoses 39 and 40 are first - while the auxiliary piece 24 is swung open - passed in the arrow direction through the respective guide bores 41 in the inlet guide block 37, after which they are bent around the rollers 29-31 of the rotor 26 and finally passed through the guide bores 24 in the outlet guide block 38 outwardly, upon which the auxiliary piece 34 is swung in its closed position and locked.

As may be seen in fig. 1, the outlet ends of the two hoses 39 and 40 are connected to a branch 23b and 23a respectively of the inlet tube 23 of the mixing and dispensing cylinder 9, whereas the inlet end of the hose 40 is connected to the outlet 7 of the container 6 comprising the starting mix 50 and the inlet end of the hose 39 is freely suspending above the bottom of the space 2.

In the position shown in fig. 2 both of the hoses 39 and 40 are flat-squeezed against the support wall 32 at a location indicated at x', so that the internal spaces of the two hose portions on either sides of the axis 25 are separated from each other. When the pump is in use, i.e. when the rollers are moving in the arrow direction about the axis of the shaft 25 (vide fig. 1 and 2) the location x' gradually displaces towards the location x'' so that the substance contained in the right-hand portion of the hose is gradually expelled in the arrow direction, whereas an amount of air and ice mix respectively is sucked into the left hand portion of the hose. When e.g. the roller 30 has proceeded from x' to x'' and is about to permit the hoses to open again, the roller 29 will have arrived at the location x, where the hoses are squeezed again to start a next suction-pressure stroke of the pump. The displaced ice mix and air are supplied to the mixing and dispensing cylinder through the inlet tube 23, while the stirring assembly 14 is rotating in the arrow direction (fig. 1).

The supply of ice mix and air by the pump 8 to the cylinder 9 continues until the latter is completely loaded and a predetermined pressure has been obtained in the cylinder. This pressure is monitored in the outlet guide block 38, more particularly in the upper guide bore 42, which accommodates the hose 40 that is used for the displacement of the ice mix. The hose 40 is formed of a transparent elastic material, so that the hose may expand under pressure. The upper guide bore 42 is partly delimited by a lid-like wall portion 38a, that is hinged about an axis 43 and nay, against the bias of a spring 44, swing slightly upwardly under the action of the pressure within the expansive portion of the hose 40 within the guide bore 42 (vide fig. 2 and 5).

In the electric circuit of the drive motor (not shown) of the pump 8 a proximity type switch 45 (vide fig. 5) may be provided which has a maximum spacing h relative to an adjustment pin 46 provided in the lid portion 38a when the pump is rotating. As soon as the predetermined pressure is obtained or exceeded, the hose 40 will expand and cause the lid portion 38a to swing upwardly to such an extent, that the spacing between the proximity switch 45 and the adjustment pin 46 raises above the maximum value h. The signal produced thereby causes the pump to be switched off until the pressure in the cylinder 9, e.g. as a result of an amount of soft ice being dispensed therefrom, has sufficiently decreased for having the pump switched on again.

A switch off of the pump is also taking place as soon as the ice mix supply 5 in the container 6 is consumed. This moment is detected by a detection device of the opto-electrical type, which is provided in a transverse passage 47, opening on opposite sides into the upper guide bore 41 in the inlet guide block 37. The detection device e.g. comprises a transmitter portion 48 in the right-hand section of the passage 47 and a receiver portion 49 in the left-hand section of the passage 47. The detection device 48, 49 may also be part of the electric circuit of the drive motor of the pump 8 and may be used to produce a signal that causes the drive motor of the pump to be switched off as soon as the detector portions 48 and 49 are optically connected one to another via the transparent and empty hose 40. Upon replacement of the unloaded container 6 by a loaded one the pump may be switched on again.

In the example described hereinabove the hoses 39 en 40 have the sane (inner) diameter. It will be understood, however, that hoses of different diameters may be used and that the rollers 29-31, the support wall 32 and the guide bores 41 and 42 may be adapted accordingly, if necessary.

## Claims

1. A device for preparing and dispensing ice cream, more particularly soft ice, comprising a mixing and dispensing cylinder with a stirring assembling and a dispensing opening, said cylinder being connected to the outlet of a pump of the flexible conduit and squeeze roller type, the inlet of which is to be connected to a supply of pre-mixed and pre-cooled ingredients, said pump comprising a housing with inlet and outlet guide openings for at least one flexible hose that is supported within the housing against an arcuate support wall section that extends from a bottom wall of the housing and comprising a rotor with squeeze rollers, wherein said squeeze rollers may, while the rotor is rotating, squeeze said house in a number of locations travelling along said support section in the direction of rotating, and wherein provisions are made for sucking and adding a quantity of air, characterized in that the arcuate support wall section is making part of an auxiliary piece that is mounted, on the bottom wall of the housing, to be swung from its operative position away from the rotor.

2. A device according to claim 1, characterized in that the auxiliary piece is mounted to be locked in its operative position by mean of a laterally tiltable clamping screw.

3. A device according to claims 1-2, characterized in that the inlet and outlet guide openings for the hose are provided in separate inlet and outlet guide blocks provided on the bottom wall of the housing.

4. A device according to claim 3, characterized in that a transverse passage is opening in at least one guide bore of the inlet guide block, an opto-electrical detection device being provided in said passage to produce a signal that is representative of an empty transparent hose within the respective guide bore.

5. A device according to claims 1-4, characterized in that a spring-biased wall portion of at least one guide bore of the outlet guide block is mounted to turn - against spring-bias - aside under the internal pressure in an expandable hose within said guide bore, said wall portion cooperating with a switch or sensor device adapted to produce a signal when said wall portion has moved through a predetermined distance that is representative of a predetermined maximum pressure within the hose.
